# EUROPÄISCHE PATENTSCHRIFT

(11) **EP 1 612 447 B1**
(45) Veröffentlichungstag und Bekanntmachung des Hinweises auf die Patenterteilung: **27.07.2016**
(21) Anmeldenummer: 05007880.7
(22) Anmeldetag: 11.04.2005
(51) Int. Cl.: B62D 33/06, F16F 1/373, F16F 1/377

(54) **Verbindungslager**
Connecting element
Coussinet de connection

(30) Priorität: 02.07.2004 DE 202004010409 U
(43) Veröffentlichungstag der Anmeldung: 04.01.2006
(73) Patentinhaber: BOMAG GmbH, 56154 Boppard (DE)
(72) Erfinder: Haubrich, Thomas, 56290 Gödenroth (DE); Klein, Thomas, 56653 Wehr (DE)
(74) Vertreter: Lang, Friedrich

(56) Entgegenhaltungen:
- EP-A- 1 293 701
- US-A- 6 098 949
- US-A1- 2001 040 325
- US-A1- 2003 150 663

## Beschreibung

Die Erfindung betrifft ein Verbindungslager zum elastischen Befestigen einer Fahrerkabine am Rahmen einer Vibrationswalze, wobei das Verbindungslager eine erste und zweite Befestigungsvorrichtung enthält, wobei die Befestigungsvorrichtungen mechanisch über ein Elastomer gekoppelt sind, welches als Schwingungsisolierung ausgebildet ist.

Ein derartiges Verbindungslager ist insbesondere als Kabinenlager zur Schwingungsisolation einer durch eine Vibrationswalze zur Erd- und Verkehrsflächenverdichtung erzeugten maschinentypischen Schwingung von der Fahrerkabine auf den Maschinenrahmen einsetzbar.

Komfort und Fahrdynamik eine Vibrationswalze werden maßgeblich durch die Abstimmung des Fahrwerks festgelegt. Neben dem Fährwerkkonzept ist dabei das elastische Verhalten der Gummilager zur Anbindung der Fahrwerkkomponenten, beispielsweise eines Fahrerstandes oder einer Fahrerkabine, mit einem Maschinenrahmen, entscheidend. Ein Elastomer, wie beispielsweise Gummi, trägt wegen seines geringen Bauraumbedarfs, seiner hohen Dehnbarkeit sowie geringen Dichte zur mechanischen Entkopplung von schwingenden Elementen (z.B. Fahrerkabine, Motor) mit festen Elementen (z.B. Maschinenrahmen, Motorrahmen) bei.

Fahrwerklager sind häufig Hülsenlager mit festhaftendem Innen- und Außenrohr. Während einer Vulkanisation entstehen aufgrund von Schrumpfung Elastomerzugspannungen, die durch einen anschließenden Kalibrierprozess zur Reduzierung des Außenrohrdurchmessers abgebaut werden. Diese Lager werden dann mit Hilfe einer Presspassung in das Lagerauge der Fahrwerkkomponente eingebracht.

Neben einer Schwingungsisolierung stellen diese sogenannten Gummi-Metall-Lager ebenfalls eine hervorragende Schallisolation für stark vibrierende Elemente bereit. Moderne, leistungsstarke Antriebskonzepte und gewichtsreduzierte Fahrzeugstrukturen schaffen neue und stärkere Schwingungsanregungen, die durch die Abstimmung der dynamischen Charakteristik der Gummi-Metall-Lager gezielt entkoppelt werden. Diese Lager sind auf unterschiedliche Anwendungsbereiche hin modifiziert und übertragen auf unterschiedlich abgestimmten Elastomerpfaden Feder- und Dämpferkräfte von Motoraufhängungen und entkoppeln dabei Störschwingungen vor Einleitung in den Rahmen, beziehungsweise in die Karosserie.

Auch die Elastomermischungen sind zum Teil auf unterschiedliche Anwendungsarten hin entwickelt, und auf Basis aller relevanten Polymerarten und Chemikalien werden die Elastornermischungen gezielt angewendet.

Fahrerhauslager tragen als spielfreie, elastische und schwingungsdämpfende Verbindung zwischen Rahmen und Fahrerhaus wesentlich zur Optimierung der Fahrdynamik, des Fahrkomforts und der Koordinationserhaltung des Fahrers bei. Um störende Vibrationen und Geräusche im Fahrerhaus zu verhindern, werden Komfortlagerungen entwickelt und eingesetzt, die ein Höchstmaß an Schallisolierung bieten. Gummi-Metall-Elemente können als freigeformte, kompakte Elemente, wie zum Beispiel einfache zylindrische Gummiblöcke für die Schwingungsisolierung, oder als gefügte oder gebundene Elemente eingesetzt werden.

Bei gefügten Federn muss durch ausreichende Pressung in den Wirkflächen sichergestellt sein, dass die Spannungen auf das Elastomer möglichst gleichmäßig und ohne Verformungsbehinderung übertragen werden.

Im allgemeinen enthalten Verbindungslager zwei Befestigungsvorrichtungen, wobei die Befestigungsvorrichtungen mechanisch über ein Elastomer gekoppelt sind, welches als Schwingungsisolierung ausgebildet ist. Eine häufig verwendete Art eines Verbindungslagers ist eine sogenannte Hülsenfeder (auch Silentblock genannt), bei welcher zwei im Durchmesser unterschiedliche Hülsen durch vulkanisiertes Elastomer verbunden werden. Die Außenhülse wird dabei in eine Buchse, beispielsweise in einem Rahmen, eingepasst, und durch die Innenhülse, welche ein wenig länger als die Außenhülse ausgebildet ist und an beiden Enden über die Innenhülse hervorsteht, wird eine Schraube zum Verbinden eines z.B. stark vibrierenden Elementes mit dem Rahmen gesteckt. Die auf die Innenhülse wirkende Vibration wird dabei durch das radial angeordnete Elastomer gedämpft und nur noch vermindert auf die Außenhülse, und somit auf den Rahmen, weitergeleitet.

Nachteilig an diesem Verbindungslager ist, dass es stets in einer Buchse gelagert werden muss und dadurch seine konstruktive Vielfalt eingeschränkt wird. Nachteilig ist außerdem, dass das Verbindungslager schlecht zur Aufnahme von mechanischen Anregungen, vertikal zur Längsachse geeignet ist. Nachteilig ist zudem, dass bei einem Schwenken des befestigten Elementes, dieses leicht an der Außenhülse oder dem Element zur Aufnahme der Außenhülse (Rahmen) anstößt, wodurch die mechanische Entkopplung entfällt und die Vibrationen unbehindert weitereleitet werden. Ebenfalls können durch das Anschlagen Zerstörungen am Element und/oder Rahmen auftreten.

Um einen größeren Spielraum zwischen Rahmen und Motor bereitzustellen, ist ein Gummipuffer bekannt, welcher zwei Scheiben und ein zwischen den Scheiben vulkanisiertes Elastomer enthält. Die erste und zweite Scheibe werden dabei jeweils mittels einer Befestigungsvorrichtung, beispielsweise eine Schraube, mit dem Rahmen und Motor verbunden. Motorvibrationen werden dabei durch das zwischen den Scheiben angeordnete Elastomer gedämpft.

Nachteilig hieran ist, dass bei auftretenden mechanischen Anregungen vertikal zur Längsachse, und insbesondere bei Zugspannungen, mindestens eine Scheibe von dem Elastomer losgelöst werden kann. Um diesen Nachteil zu beheben, ist es bekannt die jeweiligen Enden des Gummipuffers mit Gewindestangen auszubilden, wobei jeweils ein Ende der Gewindestangen über jeweilige Befestigungsvorrichtungen fest mit dem Elastomer verbunden ist (beispielsweise durch Vulkanisieren). Nachteilig hieran ist jedoch, dass der konstruktive Spielraum zum Einsetzen des Gummipuffers durch die Gewindestangen eingeschränkt ist. Zudem kann dieser Gummipuffer nur schwer, umständlich und somit zeitraubend eingebaut werden, da die beiden Enden der Gewindestangen mittels Gewindemuttern an Motor und Rahmen angezogen werden müssen. Außerdem erweist sich der Gummipuffer aufgrund des aufwendigen Vulkanisierungsverfahrens zum festen Einbinden der Gewindestangen als teuer in der Herstellung.

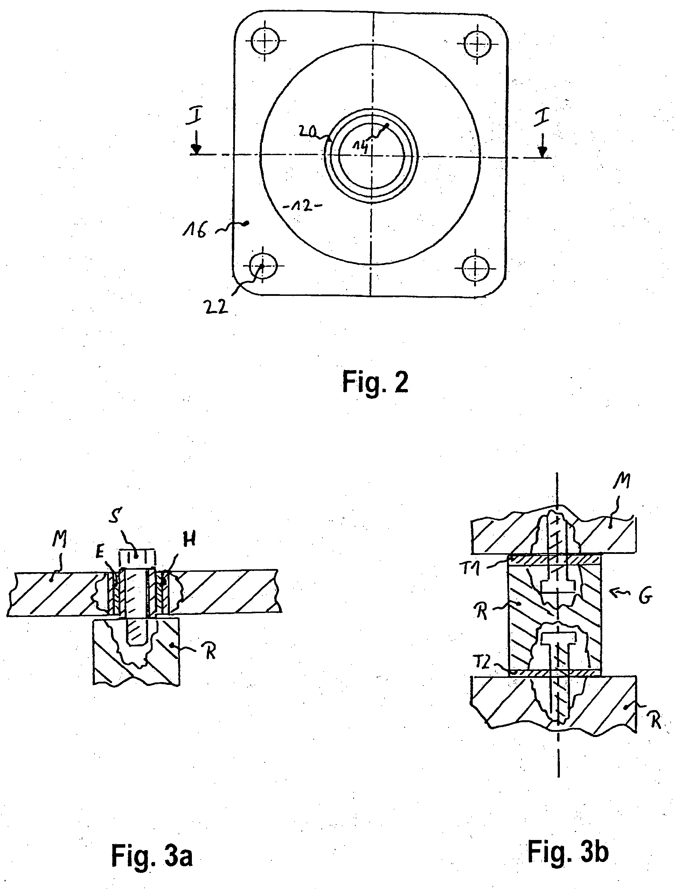

Verbindungslager dieser Art sind in den Figuren Figur 3a und 3b in Schnittansicht veranschaulicht.

Fig. 3a zeigt eine in einem Rahmen R eingesetzte Hülsenfeder H, durch welche eine Schraube S zum Befestigen eines Motors M hindurch gesteckt und befestigt ist. Vibrationen, welche vom Motor M ausgehen, werden dabei auf die Schraube S weitergeleitet, wobei sie durch das Elastomer E zwischen Innenhülse und Außenhülse gedämpft werden und nur noch reduziert auf den Rahmen R weitergeleitet werden. Nachteilig hieran ist, dass der Motor M schon bei einem Schwenken innerhalb eines geringen Winkelbereiches gegen den Rahmen R anstoßen kann, wodurch Beschädigungen hervorgerufen werden können.

Figur 3b zeigt einen Gummipuffer G aus dem Stand der Technik, welcher ebenfalls als Verbindungselement zwischen Motor M und Rahmen R herangezogen werden kann, wobei Vibrationen des Motors M durch das im Gummipuffer enthaltene Elastomer E gedämpft werden und somit nur noch vermindert auf den Rahmen R weitergeleitet werden. An den jeweiligen Enden des Gummipuffers G sind Teller T1, T2 angebracht, an welchen jeweils Gewindestangen befestigt sind. An diesen Gewindestangen werden wiederum jeweils Rahmen R und Motor M verbunden. Da sich die Teller bei Zugspannungen leicht vom Gummipuffer lösen können, sind die Gewindestangen mittels (nicht gezeigter) Befestigungseinrichtungen im Elastomer befestigt. Nachteilig hieran ist, dass durch die spezielle Ausgestaltung der Gewindestangen nur eine begrenzte Möglichkeit der Montage möglich ist. Zudem erweist sich die Montage als schwierig und zeitaufwendig.

Weitere Anordnungen zur schwingungsgedämpften oder -entkoppelten Lagerung von Bauteilen sind ferner aus US 6 098 949 A, US 2001/040325 A1, US 2003/150663 A1 und EP 1 293 701 A bekannt.

Der Erfindung liegt die Aufgabe zugrunde, ein Verbindungslager der eingangs genannten Art dahingehend weiterzubilden, dass das Verbindungslager schnell und einfach montierbar ist, es Vertikal- und Horizontalanregungen gut isolieren kann sowie günstig in der Herstellung ist.

Diese Aufgabe wird durch das Verbindungslager nach dem Patentanspruch 1 gelöst.

Ein wesentlicher Gedanke der Erfindung besteht darin, dass eine erste Befestigungsvorrichtung als Aufnahmehülse ausgebildet ist, welche mittig in Längsrichtung durch das Elastomer hindurch verläuft, und eine zweite Befestigungsvorrichtung als ein Befestigungsflansch ausgebildet ist, welcher im wesentlichen senkrecht zur Aufnahmehülse angeordnet ist, wobei ein erster Innenbereich des Befestigungsflansches im Elastomer angeordnet ist und ein Außenbereich des Befestigungsflansches außerhalb des Elastomers hervorsteht.

Durch diese Ausgestaltung des Verbindungslagers kann dieses zunächst schnell und einfach an einem Rahmen befestigt werden, indem eine Schraube durch die Aufnahmehülse gesteckt wird und am anderen Ende am Rahmen befestigt wird. Dazu kann beispielsweise am Rahmen ein entsprechendes Gewinde vorgesehen werden. Das untere Ende des Verbindungslagers, d.h. das Elastomer, ruht somit auf dem Rahmen. Der Befestigungsflansch ist mechanisch über das Elastomer mit dem Rahmen gekoppelt und kann nun als Befestigungsvorrichtung für den Motor dienen. Durch diese Ausgestaltung wird eine gute Isolation von horizontalen Beschleunigungen, bzw. äußeren Störanregungen, sowohl in als auch quer zur Fahrrichtung gewährleistet. Somit können beispielsweise Federsteifigkeits-Kennwerte des Verbindungslagers in Längsrichtung zwei- bis viermal so hoch sein als Federsteifigkeits-Kennwerte vertikal zur Längsrichtung (z.B. 585 N/mm² zu 175 N/mm²). Ein weiterer Vorteil besteht darin, dass auftretende Kabinenausreißkräfte (ROPS-Test nach DIN ISO 3471) durch die Schraube übertragen werden.

Vorzugsweise ist am oberen Ende des Elastomers eine Scheibe angeordnet, deren Außendurchmesser im wesentlichen dem Außendurchmesser des Elastomers und deren Innendurchmesser im Wesentlichen dem Außendurchmesser der Aufnahmehülse am oberen Ende des Verbindungslagers entspricht. Durch diese Ausgestaltung wird das Elastomer beim Anspannen der Befestigungsschraube gleichmäßig vorgespannt, so dass eine gleichmäßigere und bessere Schwingungsisolierung bereitgestellt werden kann. Die Scheibe und die Aufnahmehülse können dabei derart ausgebildet sein, dass die Scheibe im eingespannten Zustand des Verbindungslagers mit der Aufnahmehülse in Eingriff steht. Alternativ können Scheibe und Aufnahmehülse einstückig ausgebildet sein.

Vorzugsweise sind Scheibe und Befestigungsflansch derart ausgebildet, dass die Scheibe im Belastungsfall am Befestigungsflansch abstützbar ist. Dazu ist es zweckmäßig, dass der Außendurchmesser der Scheibe größer als der Bohrungsdurchmesser des Befestigungsflansches ist. Somit können Kabinenausreißkräfte durch die Scheibe übertragen werden, die gegen die Aufnahmehülse gespannt ist, und sich im Belastungsfall am Befestigungsflansch abstützt.

Erfindungsgemäß ist im unteren Bereich des Elastomers eine radiale Ausnehmung ausgebildet, welche im wesentlichen parallel zur Aufnahmehülse, also in Längsrichtung, und bis zu einer vorbestimmten Höhe des Verbindungslagers verläuft. Vorteilhaft an dieser Ausgestaltung ist, dass die Ausnehmung die Federsteifigkeit in vertikaler Richtung von der Federsteifigkeit in horizontaler Richtung trennt und somit die Federsteifigkeiten unabhängig von einander beeinflusst werden können. Das einfache Schwenken bis zu diesem Bereich erlaubt auch eine einfache Justierung des Befestigungsflansches, wodurch es sich als einfacher gestaltet das zu befestigende Element, beispielsweise den Motor, welches von seiner ursprünglichen Befestigungsposition etwas versetzt ist, mit dem Befestigungsflansch zu verbinden. Durch diesen Toleranzbereich wird es also ermöglicht, dass der Motor schnell und einfach mit dem Befestigungsflansch verbunden werden kann.

Vorteilhafterweise verläuft dabei die radiale Ausnehmung angrenzend zur Aufnahmehülse. Die Ausgestaltung der radialen Ausnehmung kann variieren, wobei bei wachsender Ausnehmung auch der Toleranzbereich wächst. Auch wächst dieser Toleranzbereich mit der Höhe, mit welcher die radiale Ausnehmung im Elastomer ausgebildet ist. Diese Höhe muss jedoch unterhalb der Gesamthöhe des Verbindungslagers liegen.

Vorzugsweise ist die Aufnahmehülse im oberen Bereich konisch ausgebildet. Diese Ausgestaltung dient als Montagehilfe.

Vorzugsweise ist der Befestigungsflansch im wesentlichen rechteckig ausgebildet und weist eine Innenbohrung auf. Diese Innenbohrung ist dabei derart ausgebildet, dass deren Durchmesser größer als der Durchmesser der Aufnahmehülse ist, so dass zwischen Befestigungsflansch und Aufnahmehülse ausreichend Elastomer vorliegt. In einer weiteren Ausgestaltung sind im Außenbereich des Befestigungsflansches Befestigungslöcher angeordnet. Es ist dabei vorteilhaft, diese Befestigungslöcher an den Kantenbereichen des Befestigungsflansches vorzusehen. Durch diese Befestigungslöcher können beispielsweise Schrauben zum Befestigen eines Motors hindurch gesteckt werden.

Vorteilhafterweise ist das Elastomer vorzugsweise im Bereich des angeordneten Befestigungsflansches und/oder am unteren Bereich wulstförmig ausgebildet. Durch diese Ausgestaltung steht der Befestigungsflansch in festem Eingriff mit dem Elastomer, wodurch eine feste Verbindung gewährleistet wird.

Nachfolgend werden bevorzugte Ausführungsformen der Erfindung anhand von Abbildungen näher beschrieben. Hierbei zeigen schematisch:
- Figur 1a: ein Verbindungslager in einer Schnittansicht in Längsrichtung (nicht von der Erfindung beansprucht);
- Figur 1b: das erfindungsgemäße Verbindungslager in einer Schnittansicht in Längsrichtung; und
- Figur 2: das erfindungsgemäße Verbindungslager nach Figur 1 bin einer Schnittansicht bei Schnittlinie I - I.

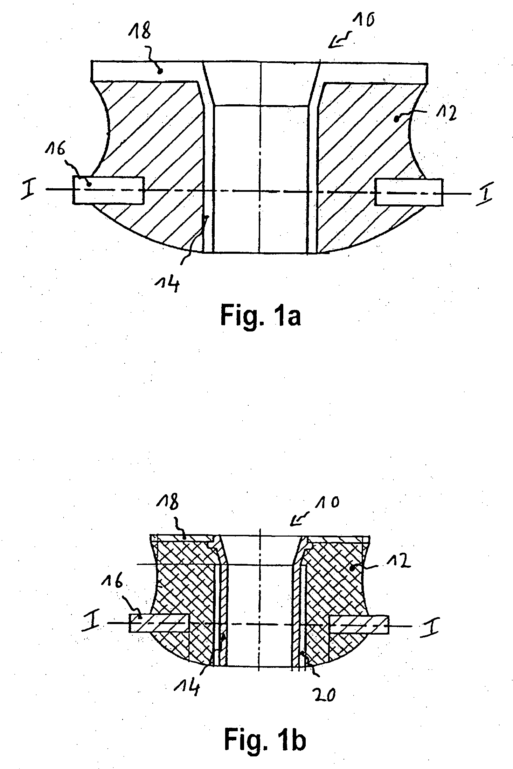

Figuren 1a und 1b zeigen jeweils ein Verbindungslager 10 zum Befestigen einer Fahrerkabine am Rahmen einer Vibrationswalze (nicht dargestellt). Das Verbindungslager 10 enthält ein Elastomer 12, durch welches mittig in Längsrichtung eine Aufnahmehülse 14 verläuft. Am Außenbereich des Elastomers 12 ist ein Befestigungsflansch 16 angeordnet, welcher fest mit dem Elastomer 12 verbunden ist. Am oberen Ende des Elastomers 12 ist eine Scheibe 18, welche beim Anpressen des Verbindungslagers 10 mechanisch im festen Eingriff mit der Aufnahmehülse 14 steht.

Bei dem in Figur 1a gezeigten Verbindungslager 10 (nicht von der Erfindung beansprucht) sind die Scheibe 18 und Aufnahmehülse 14 einstückig ausgebildet.

Bei dem in Figur 1 b gezeigten erfindungsgemäßen Verbindungslager 10 sind die Scheibe 18 und Aufnahmehülse 14 derart ausgebildet, dass im eingespannten Zustand des Verbindungslagers 10 die Scheibe 18 mit der Aufnahmehülse 14 in Eingriff steht. Im unteren Bereich des Elastomers 12 ist eine ringzylindrische Ausnehmung 20 ausgebildet, welche im wesentlichen parallel zur Aufnahmehülse 14 verläuft. Diese radiale Ausnehmung 20 ermöglicht in Längsrichtung ein einfaches Schwenken des Verbindungslagers 10 im eingesetzten Zustand. Somit kann ein am Befestigungsflansch zu befestigendes Element schnell und einfach befestigt werden. Bei den in Figuren 1a und 1b gezeigten Verbindungslagern 10 ist das Elastomer jeweils im Bereich des Befestigungsflansches 16 wulstförmig konvex ausgebildet. Ebenfalls ist das Elastomer am unteren Bereich des Verbindungslagers 10 wulstförmig konvex ausgebildet.

Figur 2 zeigt das Verbindungslager 10 in einer Schnittansicht bei Schnittlinie I - I. Der Befestigungsflansch ist rechteckig ausgebildet und enthält an seinen Kantenbereichen jeweils ein Befestigungsloch 22. In dieser Schnittansicht sind radial nach außen verlaufend die Aufnahmehülse 14, die daran anschließende Ausnehmung 20 und das daran anschließende Elastomer 12 zu erkennen.

## Patentansprüche

1. Verbindungslager (10) zum elastischen Befestigen einer Fahrerkabine am Rahmen einer Vibrationswalze, wobei das Verbindungslager (10) eine erste und zweite Befestigungsvorrichtung enthält, wobei die Befestigungsvorrichtungen mechanisch über ein Elastomer (12) gekoppelt sind, welches als Schwingungsisolierung ausgebildet ist, wobei die erste Befestigungsvorrichtung als Aufnahmehülse (14) ausgebildet ist, welche mittig in Längsrichtung durch das Elastomer (12) verläuft, und die zweite Befestigungsvorrichtung als ein Befestigungsflansch (16) ausgebildet ist, welcher im wesentlichen senkrecht zur Aufnahmehülse (14) angeordnet ist, wobei ein Innenbereich des Befestigungsflansches (16) im Elastomer (12) angeordnet ist und ein Außenbereich des Befestigungsflansches (16) außerhalb des Elastomers (12) hervorsteht, und wobei
im unteren Bereich des Elastomers (12) eine radiale ringzylindrische Ausnehmung (20) ausgebildet ist, welche im Wesentlichen parallel zur Aufnahmehülse (14) und bis zu einer vorbestimmten Höhe des Verbindungslagers verläuft,
**dadurch gekennzeichnet,**
**dass** die Höhe der radialen ringzylindrischen Ausnehmung (20) im Elastomer (12) deutlich über den Bereich des Befestigungsflansches (16) hinausragt, jedoch unterhalb der Gesamthöhe des Verbindungslagers (10) liegt, und dass Federsteifigkeits-Kennwerte in Längsrichtung zwei- bis viermal so hoch sind als Federsteifigkeits-Kennwerte vertikal zur Längsrichtung.

2. Verbindungslager (10) nach Anspruch 1,
**dadurch gekennzeichnet,**
**dass** am oberen Ende des Elastomers (12) eine Scheibe (18) angeordnet ist, deren Außendurchmesser im wesentlichen dem Außendurchmesser des Elastomers (12) und deren Innendurchmesser im wesentlichen dem Außendurchmesser der Aufnahmehülse (14) am oberen Ende des Verbindungslagers (10) entspricht.

3. Verbindungslager (10) nach Anspruch 2,
**dadurch gekennzeichnet,**
**dass** die Scheibe (18) und die Aufnahmehülse (14) derart ausgebildet sind, dass die Scheibe (18) im eingespannten Zustand des Verbindungslagers (10) mit der Aufnahmehülse (14) in Eingriff steht.

4. Verbindungslager nach Anspruch 2,
**dadurch gekennzeichnet,**
**dass** die Scheibe (18) und die Aufnahmehülse (14) einstückig ausgebildet sind.

5. Verbindungslager (10) nach einem der Ansprüche 2 bis 4,
**dadurch gekennzeichnet,**
**dass** die Scheibe (18) und der Befestigungsflansch (16) derart ausgebildet sind, dass die Scheibe (18) im Belastungsfall am Befestigungsflansch (16) abstützbar ist.

6. Verbindungslager (10) nach Anspruch 5,
**dadurch gekennzeichnet,**
**dass** der Außendurchmesser der Scheibe (18) größer als ein Bohrungsdurchmesser des Befestigungsflansches (16) ist.

7. Verbindungslager (10) nach einem der vorhergehenden Ansprüche,
**dadurch gekennzeichnet,**
**dass** die radiale Ausnehmung (20) angrenzend zur Aufnahmehülse (14) verläuft.

8. Verbindungslager (10) nach einem der vorhergehenden Ansprüche,
**dadurch gekennzeichnet,**
**dass** die Aufnahmehülse (14) im oberen Bereich konisch ausgebildet ist.

9. Verbindungslager (10) nach einem der vorhergehenden Ansprüche,
**dadurch gekennzeichnet,**
**dass** der Befestigungsflansch (16) im wesentlichen rechteckig ausgebildet ist und eine Innenbohrung aufweist.

10. Verbindungslager (10), nach einem der vorhergehenden Ansprüche,
**dadurch gekennzeichnet,**
**dass** im Außenbereich des Befestigungsflansches (16) Befestigungslöcher (22) angeordnet sind.

11. Verbindungslager (10) nach einem der vorhergehenden Ansprüche,
**dadurch gekennzeichnet,**
**dass** das Elastomer (12) vorzugsweise im Bereich des angeordneten Befestigungsflansches (16) und/oder am unteren Bereich des Verbindungslagers (10) wulstförmig ausgebildet ist.

## Claims

1. Connecting bearing (10) for elastically fastening a driver cabin to the frame of a vibration roller, wherein the connecting bearing (10) comprises a first and a second fastening device, wherein the fastening devices are coupled mechanically through an elastomer (12), which is configured as a vibration insulation, wherein the first fastening device is configured as a receiver bushing (14) running centrally in longitudinal direction through the elastomer (12), and the second fastening device is configured as a clamping collar (16) arranged essentially perpendicular to the receiver bushing (14), wherein an inner area of the clamping collar (16) is arranged in the elastomer (12) and an outer area of the clamping collar (16) projects outside the elastomer (12), and wherein
in the lower area of the elastomer (12) a radial ring-cylindrical recess (20) is provided, which is essentially parallel to the receiver bushing (14) and extends to a predetermined height of the connecting bearing,
**characterized in that**
the height of the radial ring-cylindrical recess (20) in the elastomer (12) significantly projects beyond the area of the clamping collar (16), but is below the total height of the connecting bearing (10), and that spring rigidity parameters in longitudinal direction are two to four times higher than spring rigidity parameters vertical to the longitudinal direction.

2. The connecting bearing (10) according to claim 1,
**characterized in that**
at the upper end of the elastomer (12), a disc (18) is arranged the outer diameter of which corresponds essentially to the outer diameter of the elastomer (12) and the inner diameter of which essentially corresponds to the outer diameter of the receiver bushing (14) at the upper end of the connecting bearing (10).

3. The connecting bearing (10) according to claim 2,
**characterized in that**
the disc (18) and the receiver bushing (14) are configured such that, in the clamped state of the connecting bearing (10), the disc (18) engages the receiver bushing (14).

4. The connecting bearing (10) according to claim 2,
**characterized in that**
the disc (18) and the receiver bushing (14) are configured as a single component.

5. The connecting bearing (10) according to any one of claims 2 to 4,
**characterized in that**
the disc (18) and the clamping collar (14) are configured such that the disc (18) can be supported at the clamping collar (16) in case of occurring loads.

6. The connecting bearing (10) according to claim 5,
**characterized in that**
the outer diameter of the disc (18) is greater than a bore hole diameter of the clamping collar (16).

7. The connecting bearing (10) according to any one of the preceding claims,
**characterized in that**
the radial recess (20) extends adjacent to the receiver bushing (14).

8. The connecting bearing (10) according to any one of the preceding claims,
**characterized in that**
the receiver bushing (14) is configured to have a conic shape in the upper area.

9. The connecting bearing (10) according to any one of the preceding claims, **characterized in that**
the clamping collar (16) is configured as essentially rectangular and comprises an inner bore hole.

10. The connecting bearing (10) according to any one of the preceding claims,
**characterized in that**
fastening holes (22) are provided in the outer area of the clamping collar (16).

11. The connecting bearing (10) according to any one of the preceding claims,
**characterized in that**
the elastomer (12) is preferably configured as bead-shaped in the area of the arranged clamping collar (16) and/or at the lower area of the connecting bearing (10).

## Revendications

1. Coussinet de liaison (10) pour fixer élastiquement une cabine conducteur au châssis d'un rouleau vibreur, dans lequel le coussinet de liaison (10) comprend un premier et un second dispositifs de fixation, dans lequel les dispositifs de fixation sont couplés mécaniquement par l'intermédiaire d'un élastomère (12), qui est configuré comme une isolation vibratoire, dans lequel le premier dispositif de fixation est configuré en manchon récepteur (14) courant centralement dans la direction longitudinale à travers l'élastomère (12), et le second dispositif de fixation est configuré en bride de fixation (16) disposée essentiellement perpendiculaire au manchon récepteur (14), dans lequel une zone intérieure de la bride de fixation (16) est disposée dans l'élastomère (12) et une zone extérieure de la bride de fixation (16) dépasse à l'extérieur de l'élastomère (12), et dans lequel
dans la zone inférieure de l'élastomère (12), un évidement annulaire cylindrique radial (20) est présent, qui est essentiellement parallèle au manchon récepteur (14) et s'étend jusqu'à une hauteur prédéterminée du coussinet de liaison,
**caractérisé en ce que**
la hauteur de l'évidement annulaire cylindrique radial (20) dans l'élastomère (12) dépasse de manière significative la zone de la bride de fixation (16), mais est en dessous de la hauteur totale du coussinet de liaison (10), et **en ce que** des paramètres de rigidité élastique dans la direction longitudinale sont de deux à quatre fois plus importants que des paramètres de rigidité élastique verticalement à la direction longitudinale.

2. Coussinet de liaison (10) selon la revendication 1,
**caractérisé en ce que**
à l'extrémité supérieure de l'élastomère (12), est agencé un disque (18) dont le diamètre extérieur correspond essentiellement au diamètre extérieur de l'élastomère (12) et dont le diamètre intérieur correspond essentiellement au diamètre extérieur du manchon récepteur (14) à l'extrémité supérieure du coussinet de liaison (10).

3. Coussinet de liaison (10) selon la revendication 2,
**caractérisé en ce que**
le disque (18) et le manchon récepteur (14) sont configurés de sorte que, à l'état bloqué du coussinet de liaison (10), le disque (18) s'engage avec le manchon récepteur (14).

4. Coussinet de liaison (10) selon la revendication 2,
**caractérisé en ce que**
le disque (18) et le manchon récepteur (14) sont configurés comme un élément unique.

5. Coussinet de liaison (10) selon l'une quelconque des revendications 2 à 4,
**caractérisé en ce que**
le disque (18) et la bride de fixation (16) sont configurés de sorte que le disque (18) puisse être supporté au niveau de la bride de fixation (16) au cas où surviendraient des charges.

6. Coussinet de liaison (10) selon la revendication 5,
**caractérisé en ce que**
le diamètre extérieur du disque (18) est supérieur à un diamètre de trou d'alésage de la bride de fixation (16).

7. Coussinet de liaison (10) selon l'une quelconque des revendications précédentes,
**caractérisé en ce que**
l'évidement radial (20) s'étend de manière adjacente au manchon récepteur (14).

8. Coussinet de liaison (10) selon l'une quelconque des revendications précédentes,
**caractérisé en ce que**
le manchon récepteur (14) est configuré pour avoir une forme conique dans la zone supérieure.

9. Coussinet de liaison (10) selon l'une quelconque des revendications précédentes,
**caractérisé** enceque
la bride de fixation (16) est configurée comme essentiellement rectangulaire et comprend un trou d'alésage intérieur.

10. Coussinet de liaison (10) selon l'une quelconque des revendications précédentes,
**caractérisé en ce que**
des trous (22) de fixation sont ménagés dans la zone extérieure de la bride de fixation (16).

11. Coussinet de liaison (10) selon l'une quelconque des revendications précédentes,
**caractérisé en ce que**
l'élastomère (12) est, de manière préférée, configuré en forme de bourrelet dans la zone de la bride de fixation (16) agencée et/ou au niveau de la zone inférieure du coussinet de liaison (10).
